# EUROPEAN PATENT SPECIFICATION

(11) **EP 0 920 814 B1**
(45) Date of publication and mention of the grant of the patent: **20.04.2005**
(21) Application number: 98203446.4
(22) Date of filing: 18.11.1998
(51) Int. Cl.: A23L 2/39, A23L 2/54, A23L 1/185, A23P 1/12, A23L 1/18, A23P 1/14

(54) **Malted beverage powder and process**
Malzgetränkepulver und Verfahren
Boisson maltée et procédé

(30) Priority: 02.12.1997 EP 97203767
(43) Date of publication of application: 09.06.1999
(73) Proprietor: SOCIETE DES PRODUITS NESTLE S.A., 1800 Vevey (CH)
(72) Inventor: Caly, William Guy, Dublin, OH 43016 (US); Holz Gagg, Katrin, 1009 Pully (CH); Geromini, Osvaldo, 1350 Orbe (CH); Heck, Ernst, 1302 Vufflens-la-Ville (CH); Deutsch, Roman, 1095 Lutry (CH)

(56) References cited:
- EP-A- 0 354 810
- WO-A-93/07769
- WO-A-97/34503
- DE-A- 2 712 311
- GB-A- 1 498 119
- US-A- 4 879 130

## Description

This invention relates to a process for producing a malted beverage powder and the beverage powder so produced.

Malted beverages are well known and are primarily intended as nutritive drinks. One example of such a beverage is that commercially available under the trade marks Milo and Nestomalt. Usually, these beverages are available in powdered form to which the consumer adds a hot or cold liquid; for example milk or water. Consequently the beverage powders are ideally readily soluble in hot or cold liquids. The beverages are also available in ready to drink formulations but, for flavour consistency, these formulations are usually prepared from the beverage powders.

The beverage powders are usually produced by mixing malt extracts or concentrates with a protein source (for example milk products, egg proteins, soya concentrates, etc), sugars, flavouring agents such as cocoa, vitamins, water and the like. Thereafter the mixture is cooked and dried to powder; usually by vacuum drying. The main disadvantage of these conventional processes is that large amounts of water need to be removed during the drying step; significantly increasing the cost of the beverage powders.

One attempt at providing a process with reduced energy consumption is described in PCT patent application WO 93/07769. In the process described in this PCT patent application, a cereal which contains less than 40% by weight moisture is cooked in an extruder under severe conditions. The rotational speed of the screws is described to be above 300 rpm while the temperatures developed in the extruder are in the range of 150°C to 250°C. The severe conditions are described to be necessary to solubilize α-glucans in the cereal such that the ultimate product is sufficiently soluble in water. The extrudate leaving the extruder has a moisture content of about 5 to 8% by weight which may then be further dried to acceptable levels. Consequently a maximum of about 5% by moisture need be removed; a considerable saving over the conventional processes described above.

A problem with the process described in this PCT patent application is that it is very difficult to achieve the same flavour profile and texture as the beverage powders produced by the conventional processes. This is tacitly acknowledged in the PCT patent application where it is mentioned that the products have "new and interesting flavours". Unfortunately, many brand loyal consumers notice immediately if the flavour or texture of the beverage powder is altered and usually react negatively. Therefore, while it is useful to be able to provide new flavours and textures, it is highly desirable if a new process is able to provide a product which at least closely mimics the flavour and texture of the product already on the market.

An object of the invention, therefore, is to provide a process for producing a malted beverage powder which entails little drying and which is capable of producing a malted beverage powder having flavour and texture comparable to those produced by conventional vacuum drying processes.

Accordingly, this invention provides process for producing a malted beverage powder, the process comprising:
introducing malted beverage ingredients into an extruder, the malted beverage ingredients having a total moisture content of less than about 9% by weight;
heating the malted beverage ingredients in the extruder to a temperature sufficient to provide a molten mass but less than about 150°C;
extruding the molten mass through one or more orifices to provide an expanded extrudate;
cooling the expanded extrudate to stabilise the expanded structure of the expanded extrudate; and
comminuting the expanded extrudate to powder.

Surprisingly, despite the process being very different to conventional vacuum drying processes, the process is able to produce malted beverage powders which have a taste profile closely mimicking the taste of conventional beverage powders. Further, the process is surprisingly able to produce beverage powders having similar appearance, texture and density to those of conventional beverage powders. Moreover, the process provides the substantial advantage that little or no drying of the product is required; greatly reducing energy consumption.

Preferably the malted beverage ingredients contain from about 10% to about 80% by weight malt; more preferably the malted beverage ingredients contain about 15% to about 50% by weight malt; for example about 20% to about 30% by weight malt. The malt may be in the form of a liquid malt extract or a malt powder, or both.

The malted beverage ingredients preferably further comprise about 15% to about 30% by weight of a powdered or granulated sweetener; for example from about 20% to about 25% by weight. The sweetener may be selected from, for example, sucrose (table sugar), fructose, glucose, maltodextrin, honey, artificial sweeteners (for example aspartame), and mixtures thereof. Crystalline sucrose is preferred. It is also possible to omit the sweetener from the malted beverage ingredients and incorporate it into the malted beverage powder ultimately produced.

The malted beverage ingredients may also contain a protein source; for example milk powder, milk proteins, egg proteins, soya concentrates or isolates, and mixtures thereof. Skimmed milk powder is especially preferred. The protein source is preferably present in an amount of about 15% to about 30% by weight; for example from about 20% to about 25% by weight.

Preferably the malted beverage ingredients also comprise cocoa powder and a fat. The cocoa powder is preferably present in an amount of about 5% to about 20% by weight; especially about 10% to about 16% by weight. The fat may be in solid or liquid form and is preferably a vegetable fat or an animal fat such as butter fat. The fat is preferably present in an amount of about 5% to about 15% by weight; especially about 6% to about 10%.

The amount of moisture in the malted beverage ingredients is preferably in the range of about 7% to about 2% by weight; more preferably about 5% to about 2% by weight.

The inert gas introduced into the extruder may be selected from nitrogen gas, carbon dioxide gas, helium gas, and the like. Nitrogen gas is preferred.

The malted beverage ingredients are preferably heated to a temperature in the range of about 120°C to about 150°C; more preferably about 130°C to about 145°C. The maximum pressure generated in the extruder is preferably in the range of about 2000 kPa to about 10000 kPa.

The gassed molten mass may be extruded through an orifice in the form of a sheet. To obtain this, the orifice is preferably rectangular in cross section and has a smaller dimension less than about 1 mm; more preferably from about 0.1 mm to about 0.5 mm.

The expanded extrudate is preferably cooled to a temperature in the range of about 30°C to about 105°C; more preferably below about 60°C; for example below the glass transition temperature of the expanded extrudate. The time taken to cool the extrudate is preferably within the range of about 5 seconds to about 5 minutes. Preferably, cooling commences substantially immediately (within about 3 seconds) after the expanded extrudate leaves the orifice through which it is extruded. The expanded extrudate is conveniently cooled by spraying liquid carbon dioxide or nitrogen onto the expanded extrudate, or by extruding the gassed molten mass directly onto chilling conveyers, or by injecting a gas into the expanded extrudate. If desired, the extrudate may be subjected to further cooling.

If the moisture content of the extrudate is greater than about 3% by weight, the extrudate is preferably dried. Drying may take place at any suitable point in the process; for example after comminution of the expanded extrudate.

The invention also provides a malted beverage powder produced by the process defined above. Preferably the malted beverage powder has a tapped density of about 400 g/l to about 600 g/l.

Embodiments of the invention are now described, by way of example only, with reference to the drawing which is a schematic diagram illustrating a process for producing a beverage powder.

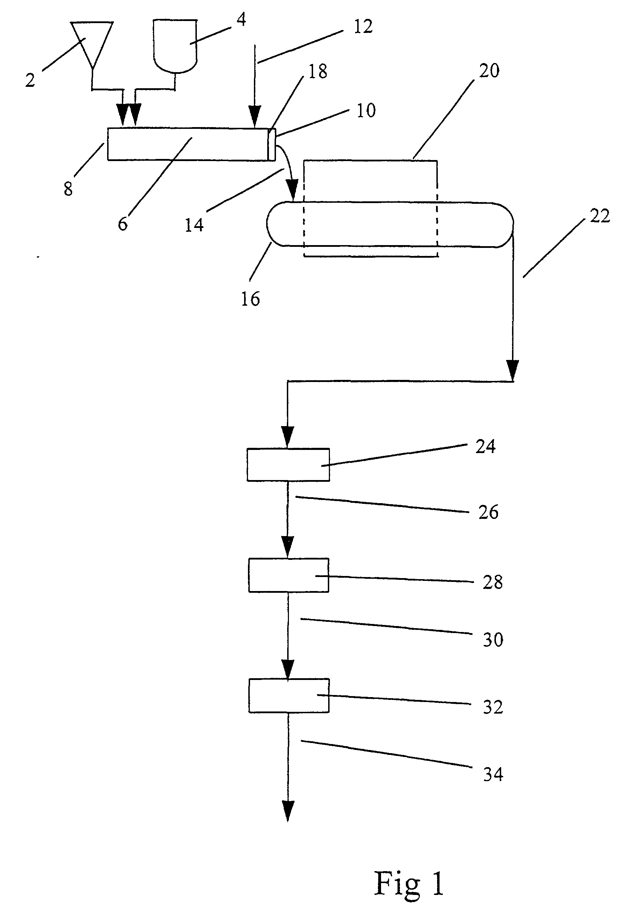

Referring to Figure 1, dry beverage ingredients are held in a hopper 2. The dry beverage ingredients may vary as desired according to local tastes and recipes. However, the dry beverage ingredients conveniently comprise one or more of a powdered protein source (for example milk powder skim milk powder, egg protein powder, vegetable or grain protein isolates such as soya protein isolates), sugars or sweeteners (for example, sucrose, fructose, glucose, artificial sweeteners, etc), malt powders, starch powders, vitamins, minerals, cocoa powders, and powdered flavouring agents. The exact amount of each dry beverage ingredient may vary widely according to local recipes. Also, certain of the dry beverage ingredients may be omitted entirely.

Liquid beverage ingredients are held in a tank 4. The liquid beverage ingredients may also vary as desired according to local tastes and recipes. However the liquid beverage ingredients commonly comprise one or more of fats and oils (for example, vegetable fats such as palm oils and palm fats, and animal fats such as butter fats), liquid malt extracts, liquid sweeteners such as honey, liquid protein sources such as vegetable protein concentrates, and the like. The exact amount of each liquid beverage ingredient may also vary widely according to local recipes and certain of the liquid beverage ingredients may be omitted entirely. If necessary, the tank 4 may be heated to keep liquid any high melting point fats.

The dry and liquid ingredients may be conveniently obtained from local sources. The make up and specifications of these ingredients is not critical. If a malted beverage powder is already produced by conventional processes, ideally as many as possible of the same ingredients as used in the conventional processes are used. This has the advantage of making it easier to achieve the same flavour profile; if this is desired.

The dry beverage ingredients and the liquid beverage ingredients are fed to the inlet end 8 of an extruder 6. The extruder 6 may be any suitable extruder; single screw or twin screw. Suitable extruders are commercially available; for example extruders from the Wenger Manufacturing Inc, Bühler AG, Werner & Pfeiderer, and Clextral SA are widely available and well known in the art. Twin screw extruders which have co-rotating and inter-meshing screws are particularly suitable. The rotational speed of the screw or screws is conveniently in the range of about 150 rpm to about 400 rpm; for example about 250 rpm. The pressure generated in the extruder 6 at the die end 10 is conveniently in the range of about 2000 kPa to about 20000 kPa.

Although the dry beverage ingredients in the hopper 2 and the liquid beverage ingredients in the tank 4 may vary widely, certain constraints apply to the combination fed into the extruder 6. In particular, the amount of moisture, on the basis of the combined weight of the dry and liquid ingredients fed into the extruder 6, must not exceed about 9%. In particular, it is preferred if the amount of moisture is in the range of about 2% to about 7% by weight.

Although most of the powdered ingredients contain small amounts of moisture, the primary source of moisture is liquid malt extract, for example most commercial liquid malt extracts contain between 20 to 30% by weight water. Consequently, to reduce the moisture levels, the amount of liquid malt extract introduced into the extruder 6 needs to be controlled. However, in order to provide a malted beverage powder of the correct flavour and mouthfeel, the total amount of malt added cannot be reduced beyond certain limits; for example malt preferably comprises between about 10% to about 80% by weight of the liquid and dry ingredients fed into the extruder 6. Therefore, if necessary to obtain the correct moisture and malt levels, malt powder may be used in partial or full replacement of liquid malt extract.

The liquid and dry ingredients entering the extruder 6 are then transported from the inlet end 8 to the die end 10 of the extruder 6. During this transport, the liquid and dry ingredients are thoroughly and homogeneously mixed. They are also subjected to mechanical working such that the temperature of the mixture is raised and the mixture is subjected to cooking. If necessary, external heating or cooling may be applied to reach and maintain cooking temperatures. Although the mixture must be subjected to cooking and therefore should reach a temperature of at least about 90°C at the die end 10 of the extruder 6, burning of the mixture should be avoided. Burning may adversely affect the flavour of the beverage powder finally produced. Therefore the temperature of the mixture ideally does not exceed about 150°C at the die end 10 of the extruder 6.

An inert gas 12 is preferably injected into the mixture in the extruder 6 near the die end 10. The inert gas may be any suitable gas which does not cause significant degrading of the mixture. For example, the inert gas may be nitrogen, carbon dioxide, helium, etc. The inert gas expands once the mixture leaves the die end 10 of the extruder 6, giving the mixture an expanded, puffed structure. If desired, the extruder 6 may include a deaeration section (not shown) between the inlet end 8 and the die end 10 but prior to the point of injection of the inert gas. If a gas is later injected into the extrudate leaving the extruder, injection of an inert gas into mixture need not be necessary.

The cooked mixture or extrudate 14 leaving the die end 10 passes through a die plate 18 and falls on an endless conveyor 16. The die plate 18 may contain one or more die openings as required. However the thickness of the extrudate 14 leaving the die plate is ideally less than about 2.5 mm. Therefore, if the die plate 18 has round die openings, the diameter of the die openings should be less than about 2.5 mm; for example about 1 mm to about 2 mm. Similarly, if the die opening is rectangular, the height of the opening should be less than about 2.5 mm; more particularly less than 1 mm. In this way, downstream drying of the extrudate 14 is facilitated. In order to obtain sufficient flow rates through the extruder 6, the number of die openings may be increased as desired. If a rectangular die opening is used, it should be arranged to deliver the extrudate onto the endless conveyor 16 in the form of a sheet. A particularly suitable die plate 18 is described in European patent application 0240699; the disclosure of which is incorporated by reference. If a gas is injected into the extrudate, it is not necessary to reduce the thickness of the extrudate 14.

The extrudate 14, upon leaving the die plate 18, undergoes rapid expansion to provide a puffed, expanded structure. This puffing or expansion is caused primarily by the expansion of the inert gas which goes from an elevated pressure in the extruder 6 to atmospheric pressure. Other gases in the extrudate 14, for example water vapour, also contribute to the expansion. Further, if a gas is injected into the extrudate, the gas will cause the extrudate to expand.

It is found, however, that the puffed, expanded structure may collapse with time unless cooled. Therefore, in one embodiment, the extrudate 14 on the endless conveyor 16 is rapidly transported to a chilling station 20 in which the extrudate 14 is cooled to a temperature sufficiently low to stabilise the expanded structure. Depending upon the components of the extrudate 14, the initial moisture content and the cross-sectional shape of the extrudate 14, this temperature may vary from about 105°C to about or even below the glass transition temperature of the extrudate 14. The temperature which needs to be reached and the time necessary to reach it may be rapidly and readily determined for any extrudate by simple trial and error. However reducing the temperature of the extrudate 14 to within the range of about 30°C to about 60°C should be adequate in most situations.

The chilling station 20 may be any suitable means for cooling the extrudate 14 while the extrudate 14 is being transported through it. For example, the chilling station 20 may comprise a tunnel into which liquid carbon dioxide or liquid nitrogen is sprayed as the extrudate 14 is transported through the tunnel. In such a chilling station, the temperature of the extrudate 14 may be cooled from a temperature of 120°C or above to the required stabilising temperature in a time of about 5 seconds to about 1 minute; for example about 5 seconds to about 30 seconds.

Alternatively, in another embodiment, the endless conveyor 16 may be a chilling conveyor which has a coolant circulation system associated with the conveyor bands. Coolants such as ammonia or glycol water may circulate through the conveyor bands. This alternative has the advantage that the extrudate 14 begins to be chilled immediately upon contacting the endless conveyor 16. If a chilling conveyor is used, the extrudate 14 suitably remains in contact with it for up to about 5 minutes. It is also possible to use both a chilling conveyor and a chilling station 20.

Further, the extrudate 14 may be cooled by injecting a gas into it. In this case, further cooling may be unnecessary.

Chilling of the extrudate 14 preferably commences rapidly upon the extrudate leaving the extruder 6; more preferably substantially immediately although a few seconds delay (3 to 6 seconds) is acceptable. Use of a chilling conveyor or gas injection ensures that chilling commences substantially immediately. Otherwise the chilling station 20 should be positioned as close as possible to the position at which the extrudate 14 contacts the endless conveyor 16.

It is also possible to stabilise the expanded structure of the extrudate by incorporating additional starch into the dry beverage ingredients which are introduced into the extruder 6. Suitable starch powders are commercially available. In this way, the need to chill the extrudate rapidly may be reduced. Conveniently, the added starch may comprise up to 10% by weight of the liquid and dry beverage ingredients introduced into the extruder 6. However, if the flavour profile of the malted beverage powder is to mimic that of conventional products, the amount of added starch is best kept below 2.5% by weight.

The chilled extrudate 22 leaving the chilling station 20 may then be then transferred to a cooler 24 where it is further cooled. The cooler 24 may be a batch cooler but is preferably a continuous cooler; the chilled extrudate 22 being transported through it on an endless belt. Tunnel air coolers are particularly suitable but any suitable cooler may be used. Plainly, if the extrudate 14 is chilled sufficiently in the chilling station 20 or by gas injection, then the cooler 24 may be omitted. The temperature of the cooled extrudate 26 leaving the cooler 24 is conveniently in the range of about 30°C to about 50°C.

The cooled extrudate 26 may then be dried in a drier 28. In order to avoid collapsing of the expanded structure of the cooled extrudate 26, the drying preferably takes place at below about 60°C; for example from about 40°C to about 50°C. Ideally the cooled extrudate 26 is dried to a moisture content of below 3% by weight; for example below 2.5% by weight. The drier 28 may be any suitable drier; for example air dryers, microwave dryers (such as disclosed in US patent 5,400,524), infrared dryers, etc. Continuous dryers are particularly preferred.

The dried extrudate 30 is then transferred to a grinder 32 where it is ground to powder 34. The powder preferably has a size less than about 2 mm. The powder 34 may then be filled in packages, cans, and the like.

It will be appreciated that numerous modifications may be made to the embodiment described above without departing from the scope of the invention. For example, the cooled extrudate 26 may be ground in the grinder 32 prior to being dried in the dryer 28. This has the advantage that small particles are dried; greatly increasing the drying rate.

In another modification, providing that the expanded extrudate is sufficiently stable, the extrudate may be subjected to drying (for example by means of microwave or infrared radiation) prior to chilling in a chilling station 20 or prior to cooling in a cooler 24.

Another modification would be to decrease the moisture content of the ingredients fed into the extruder 6 (for example to less than 3% by weight). Then the expanded extrudate 14 leaving the extruder 6 will contain sufficiently little moisture so that further drying is not necessary. In such a case, the dryer 32 may be omitted entirely.

It is also possible to omit the powdered sweeteners from the dry beverage ingredients held in the hopper 2 but to add them to the powder 34 leaving the grinder. The sweeteners do not contribute much to flavour development during cooking in the extruder 6 and hence may be added at the end.

Also, if necessary, small amounts of moisture may be added to the extruder 6 during processing. This moisture flashes off upon leaving the die end 10 of the extruder 6.

In a further modification, if any of the malted beverage ingredients are adversely affected by harsh processing conditions, they may be introduced into the extruder 6 downstream from the inlet end 8. In this way, these ingredients have a smaller residence time in the extruder 6. For example, the malt powder may be introduced into the extruder 6 downstream from the inlet end 8.

Further, to assist puffing of the extrudate 14, the extrudate 14 may be extruded into an area of reduced pressure. For example, the die plate 18 may be positioned in a vacuum chamber.

### Example 1

A dry beverage mixture of 14.2% cocoa powder, 20.8% sugar, 21.7% skim milk powder and 10.9% malt extract powder and a liquid beverage mixture of 8.5% palm fat and 23.9% liquid malt extract are fed into a twin-screw, Clextral BC-45H extruder at a rate of 50 kg/hour. The extruder has a length of 1200 mm and has six sections. The die plate has two circular die openings of 1.5 mm diameter. The percentages are by weight of the total of the ingredients fed into the extruder. The liquid malt extract contains barley malt and tapioca starch in a mass ratio of 7.2:2.8 and contains 22% by weight water. Water makes up about 7.1% of the total of the ingredients fed into the extruder.

The screws of the extruder are rotated at 250 rpm. Nitrogen gas is introduced into the fifth section of the barrel of the extruder at a rate of about 400 g/hour. The ingredients in the extruder reach a temperature of about 130°C at a pressure of about 3000 kPa immediately prior to the die plate. The ingredients are extruded onto an endless belt and are conveyed through a chilling station in which liquid CO₂ is sprayed onto the extrudate and belt. The extrudate is chilled in the chilling station to a temperature of about 50°C in about 5 seconds to about 30 seconds.

The chilled extrudate is transported through a tunnel cooler in which it is cooled with compressed air at 1°C to 4°C to lower the temperature of the extrudate to about 34°C. The extrudate is then dried in a batch air dryer at 50°C to about 2% by weight moisture. The extrudate is then ground and screened through a 1.6 mm screen. Oversized particles are returned to the grinder.

The powder has the appearance, colour, density and texture of a powder produced by conventional processes. A sample of 10 g of the powder is dissolved in 100 ml of warm milk. The beverage has a taste closely mimicking that produced from conventional powders.

### Example 2

The procedure of example 1 is repeated except that the composition of the ingredients fed into the extruder is as follows: 19.7% liquid malt extract (of which 25% is water and which does not contain tapioca), 21.3% sugar, 21.4% skim milk powder, 14% cocoa powder, 8.4% palm oil, and 15.2% powdered malt extract. The ingredients in total contain about 6.2% moisture.

The powder has the appearance, colour, density and texture of a powder produced by conventional processes. A sample of 10 g of the powder is dissolved in 100 ml of warm milk. The beverage has a taste closely mimicking that produced from conventional powders.

### Example 3

The procedure of example 1 is repeated except that the composition of the ingredients fed into the extruder is as follows: 13.1% liquid malt, 21.3% sugar, 21.5% skim milk powder, 14% cocoa powder, 8.4% palm fat, and 21.7% powdered malt extract. The ingredients in total contain about 5% moisture. Further, rate of feed into the extruder is 200 kg/hour. The die plate contains a single rectangular opening of 82 mm length and 0.3 mm height arranged to deliver a sheet of extrudate on the endless belt. The pressure behind the die plate is about 8800 kPa and the temperature is about 142°C.

The powder, after chilling, cooling, drying and grinding has the appearance, colour, density and texture of a powder produced by conventional processes. A sample of 10 g of the powder is dissolved in 100 ml of warm milk. The beverage has a taste closely mimicking that produced from conventional powders.

### Example 4

Dry and liquid ingredients made up of 22.3% sugar, 22.4% skim milk powder, 14.7% cocoa powder, 8.8% palm fat, and 31.8% powdered malt extract are fed into a twin-screw, Clextral BC-45H extruder at a rate of 200 kg/hour. The extruder has a length of 1200 mm and has six sections. The die plate contains a single rectangular opening of 82 mm length and 0.3 mm height arranged to deliver a sheet of extrudate on the endless belt. The percentages are by weight of the total of the ingredients fed into the extruder. Water makes up about 2.4% of the total of the ingredients fed into the extruder.

The screws of the extruder are rotated at 240 rpm. Nitrogen gas is introduced into the fifth section of the barrel of the extruder at a rate of about 400 g/hour. The ingredients in the extruder reach a temperature of about 140°C at a pressure of about 8800 kPa immediately prior to the die plate. The ingredients are extruded onto an endless belt and are conveyed through a chilling station in which liquid CO₂ is sprayed onto the extrudate and belt. The extrudate leaving the chilling station has a temperature of about 100°C.

The chilled extrudate is transported through a tunnel cooler in which it is subjected to air at 1°C to 4°C to cool the extrudate to about 60°C. The extrudate is sufficiently rigid to be ground and further cooling is not required. No drying is carried out because the extrudate has a sufficiently low moisture content. The extrudate is then ground and screened through a 2 mm screen. Oversized particles are returned to the grinder.

The powder has the appearance, colour, density and texture of a powder produced by conventional processes. A sample of 10 g of the powder is dissolved in 100 ml of warm milk. The beverage has a taste closely mimicking that produced from conventional powders.

### Example 5

The procedure of example 1 is repeated except that the ingredients fed into the extruder include 2.5% powdered starch. The ingredients in total contain about 7% moisture.

The powder has the appearance, colour, density and texture of a powder produced by conventional processes. A sample of 10 g of the powder is dissolved in 100 ml of warm milk. The beverage has a taste closely mimicking that produced from conventional powders.

## Claims

1. A process for producing a malted beverage powder, the process comprising: introducing malted beverage ingredients into an extruder, the malted beverage ingredients having a total moisture content of less than about 9% by weight;
heating the malted beverage ingredients in the extruder to a temperature sufficient to provide a molten mass but less than about 150°C;
extruding the molten mass through one or more orifices to provide an expanded extrudate;
cooling the expanded extrudate to stabilise the expanded structure of the expanded extrudate; and
comminuting the expanded extrudate to powder.

2. A process acoording to claim 1 in which an inert gas is injected into the molten mass in the extruder.

3. A process according to claim 1 or claim 2 in which the malted beverage ingredients contain from about 10% to about 80% by weight malt and about 15% to about 30% by weight of a protein source.

4. A process according to claim 3 in which the malt is in the form of a liquid malt extract or a malt powder, or both.

5. A process according to claim 3 or claim 4 in which the protein source is selected from milk powder, milk proteins, egg proteins, soya concentrates or isolates, and mixtures thereof.

6. A process according to any one of claims 3 to 5 in which the malted beverage ingredients further comprise about 15% to about 30% by weight of a powdered or granulated sweetener; about 5% to about 20% by weight of cocoa powder; and about 5% to about 15% by weight of a fat.

7. A process according to any one of claims 1 to 6 in which the amount of moisture in the malted beverage ingredients is about 7% to about 2% by weight.

8. A process according to any one of claims 1 to 7 in which the malted beverage ingredients are heated to a temperature in the range of about 120°C to about 150°C.

9. A process according to any one of claims 1 to 8 in which the expanded extrudate is cooled to a temperature of less than about 60°C.

10. A process according to any one of claims 1 to 9 in which cooling of the expanded extrudate commences within 3 seconds of the expanded extrudate leaving the orifice.

## Patentansprüche

1. Verfahren zur Herstellung eines Malzgetränkepulvers, wobei das Verfahren umfaßt:
Einführen der Zutaten für das Malzgetränk in einen Extruder, wobei die Zutaten für das Malzgetränk einen gesamten Feuchtigkeitsgehalt von weniger als etwa 9 Gew.-% aufweisen;
Erhitzen der Zutaten für das Malzgetränk in dem Extruder auf eine Temperatur, die ausreicht, eine geschmolzene Masse zu erhalten, jedoch auf weniger als etwa 150°C;
Extrudieren der geschmolzenen Masse durch eine oder mehrere Öffnungen, um ein expandiertes Extrudat zu erhalten;
Abkühlen des expandierten Extrudats, um die expandierte Struktur des expandierten Extrudats zu stabilisieren; und
Zerkleinern des expandierten Extrudats zu einem Pulver.

2. Verfahren nach Anspruch 1, wobei ein Inertgas in die geschmolzene Masse im Extruder injiziert wird.

3. Verfahren nach Anspruch 1 oder Anspruch 2, wobei die Zutaten für das Malzgetränk von etwa 10 bis etwa 80 Gew.-% Malz und etwa 15 bis etwa 30 Gew.-% einer Proteinquelle enthalten.

4. Verfahren nach Anspruch 3, wobei das Malz in Form eines flüssigen Malzextrakts oder eines Malzpulvers oder von beiden vorliegt.

5. Verfahren nach Anspruch 3 oder Anspruch 4. wobei die Proteinquelle ausgewählt ist aus Milchpulver, Milchproteinen, Eiproteinen, Sojakonzentraten oder -isolaten und Mischungen davon.

6. Verfahren nach irgendeinem der Ansprüche 3 bis 5, wobei die Zutaten für das Malzgetränk außerdem etwa 15 bis etwa 30 Gew.-% eines pulverisierten oder granulierten Süßungsmittels; etwa 5 bis etwa 20 Gew.-% Kakaopulver; und etwa 5 bis etwa 15 Gew.-% eines Fetts umfassen.

7. Verfahren nach irgendeinem der Ansprüche 1 bis 6, wobei die Menge der Feuchtigkeit in den Zutaten für das Malzgetränk etwa 7 bis etwa 2 Gew.-% beträgt.

8. Verfahren nach irgendeinem der Ansprüche 1 bis 7, wobei die Zutaten für das Malzgetränk auf eine Temperatur im Bereich von etwa 120°C bis etwa 150°C erhitzt werden.

9. Verfahren nach irgendeinem der Ansprüche 1 bis 8, wobei das expandierte Extrudat auf eine Temperatur von weniger als etwa 60°C abgekühlt wird.

10. Verfahren nach irgendeinem der Ansprüche 1 bis 9, wobei das Abkühlen des expandierten Extrudats innerhalb von 3 Sekunden nach dem Austritt des expandierten Extrudats aus der Öffnung einsetzt.

## Revendications

1. Procédé pour la production d'une poudre pour boisson maltée, procédé comprenant les étapes consistant à :
introduire les ingrédients de la boisson maltée dans une extrudeuse, les ingrédients de la boisson maltée ayant une teneur totale en eau inférieure à environ 9 % en poids ;
chauffer les ingrédients de la boisson maltée dans l'extrudeuse à une température suffisante pour produire une masse fondue mais inférieure à environ 150°C ;
extruder la masse fondue à travers un ou plusieurs orifices pour produire un extrudat expansé ;
refroidir l'extrudat expansé pour stabiliser la structure expansée de l'extrudat expansé ; et
broyer finement l'extrudat expansé en une poudre.

2. Procédé suivant la revendication 1, dans lequel un gaz inerte est injecté dans la masse fondue dans l'extrudeuse.

3. Procédé suivant la revendication 1 ou la revendication 2, dans lequel les ingrédients de la boisson maltée contiennent environ 10 % à environ 80 % en poids de malt et environ 15 % à environ 30 % en poids d'une source de protéines.

4. Procédé suivant la revendication 3, dans lequel le malt est sous forme d'un extrait de malt liquide ou d'une poudre de malt ou bien sous ces deux formes.

5. Procédé suivant la revendication 3 ou la revendication 4, dans lequel la source de protéine est choisie entre le lait en poudre, des protéines du lait, des protéines d'oeuf, des concentrés ou isolats de soja et leurs mélanges.

6. Procédé suivant l'une quelconque des revendications 3 à 5, dans lequel les ingrédients de la boisson maltée comprennent en outre environ 15 % à environ 30 % en poids d'un édulcorant en poudre ou granulé ; environ 5 % à environ 20 % en poids de poudre de cacao et environ 5 % à environ 15 % en poids d'une matière grasse.

7. Procédé suivant l'une quelconque des revendications 1 à 6, dans lequel la quantité d'eau dans les ingrédients de la boisson maltée est comprise dans l'intervalle d'environ 7 % à environ 2 % en poids.

8. Procédé suivant l'une quelconque des revendications 1 à 7, dans lequel les ingrédients de la boisson maltée sont chauffés à une température comprise dans l'intervalle d'environ 120°C à environ 150°C.

9. Procédé suivant l'une quelconque des revendications 1 à 8, dans lequel l'extrudat expansé est refroidi à une température inférieure à environ 60°C.

10. Procédé suivant l'une quelconque des revendications 1 à 9, dans lequel le refroidissement de l'extrudat expansé commence dans les 3 secondes qui suivent la sortie de l'extrudat expansé de l'orifice.
